(19) Europäisches Patentamt
European Patent Office
Office européen des brevets

(11) **EP 4 730 459 A1**

(12) **EUROPEAN PATENT APPLICATION**
published in accordance with Art. 153(4) EPC

(43) Date of publication:
**22.04.2026  Bulletin 2026/17**

(21) Application number: **25749013.6**

(22) Date of filing: **24.01.2025**

(51) International Patent Classification (IPC):
**H01M 10/04** (2006.01)   **H01M 10/0565** (2010.01)

(52) Cooperative Patent Classification (CPC):
**H01M 10/04; H01M 10/0565**

(86) International application number:
**PCT/KR2025/001456**

(87) International publication number:
**WO 2025/165110 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **30.01.2024  KR 20240013980**

(71) Applicant: **LG Energy Solution, Ltd.
Seoul 07335 (KR)**

(72) Inventors:
• **KANG, Yonghee
  Daejeon 34122 (KR)**
• **KIM, Dong Kyu
  Daejeon 34122 (KR)**
• **RYU, Jihoon
  Daejeon 34122 (KR)**
• **LIM, Taeseob
  Daejeon 34122 (KR)**

(74) Representative: **BCKIP Part mbB
MK1
Landsbergerstraße 98, 3.Stock
80339 München (DE)**

(54) **BATTERY CELL HEATING DEVICE**

(57)    The present application can provide a battery cell heating device for heating a battery cell comprising a body portion and an electrode tab extending from the side surface of the body portion, the battery cell heating device comprising: a first jig plate for supporting one surface of the body portion; and a second jig plate for supporting the other surface of the body portion, wherein the first jig plate and/or the second jig plate surrounds the side surface of the body portion.

FIG. 1

## Description

## CROSS-REFERENCE TO RELATED APPLICATIONS

The present application claims the benefit of priority of Korean Patent Application No. 10-2024-0013980 filed on January 30, 2024 and Korean Patent Application No. 10-2025-0011189 filed on January 24, 2025, in the Korean Intellectual Property Office, the entire contents of which application is incorporated herein for all purposes by this reference.

## Technical Field

The present disclosure relates to a heating device for a battery cell for heating or pressurizing a battery cell.

## Background

Recently, demands for mobile devices, such as tablet computers and wireless headphones, have been increasing. In addition, as the development of the electric vehicles, storage batteries for storing energy, robots, and satellites is advancing rapidly, research into secondary batteries, as an energy source that can be discharged and recharged repeatedly, is being conducted actively.

Commercially available rechargeable batteries are: nickel-cadmium batteries, nickel-hydrogen batteries, nickel-zinc batteries, and lithium secondary batteries. Among the batteries listed above, the lithium batteries offer benefits of free charging and discharging, low self-discharge rate, and high energy density, as the memory effect barely occurs in the lithium second batteries, when compared to nickel-based secondary batteries.

A battery cell, which is a functional unit of a battery, uses an electrolyte which is in liquid form at room temperature, and the electrolyte consists of a flammable material which makes the battery cell vulnerable to high temperature or fire. To address this problem, a polymer battery cell including a polyelectrolyte which is in solid form at room temperature is developed by injecting a curable electrolyte composition that is in liquid form at room temperature, into the external material of the battery cell and going through a curing process.

However, issues have arisen during a process of manufacturing the polymer battery cell as there were cases where the curing process was proceeded with the electrolyte composition in liquid form being pushed toward the direction of the gravity which results in uneven curing of the electrolyte, and deformation of the shape of the battery cell, for example, leading to deterioration of the battery performance.

To prevent issues caused by gravity during the manufacturing process of the polymer battery cell, metal plates are used to apply pressure to opposite sides of the battery cell, along with a spacer to maintain a gap between the metal plates. However, this method also had issues of over-pressurization causing electrolyte leakage, resulting in leaving insufficient amount of electrolyte between the electrodes, or, alternatively, of insufficient pressurization, leading to uneven curing, which makes it difficult to maintain the battery performance.

## Technical Goals

The present disclosure may provide a heating device for a battery cell to prevent deterioration of the battery performance caused by various issues, such as deformation of a battery cell due to uneven curing of a curable electrolyte composition and a chain of problems caused by occurrence of cracks. The present disclosure may provide a heating device for a battery cell to improve productivity by reducing time required for properly curing a curable electrolyte composition and by increasing processing speed.

## Technical solutions

According to an aspect, there is provided a heating device for a battery cell which may be for heating a battery cell including a main body and an electrode tab which is extended from a side surface of the main body.

According to another aspect, there is also provided a heating device for a battery cell which may include a first jig plate configured to support one surface of the main body and a second jig plate configured to support another surface of the main body, and at least one of the first jig plate or the second jig plate may surround a side surface of the main body.

The battery cell may include an electrode assembly and a curable electrolyte composition within the main body, and the curable electrolyte composition may be cured by heat.

The curable electrolyte composition may include an organic solvent and a polymer.

The organic solvent may include a cyclic carbonate-based solvent and a linear carbonate-based solvent, and the polymer may include at least one of a fluorine-based polymer or a carbonate-based polymer.

The first jig plate may include a first side wall surrounding a first region of the side surface of the main body and a first main wall surrounding one surface of the main body, and the second jig plate may include a second side wall surrounding a second region of the side surface of the main body and a second main wall surrounding another surface of the main body, and the first side wall may also surround at least a portion of one surface of the electrode tab, and the second side wall may also surround at least a portion of another surface of the electrode tab.

The first jig plate and the second jig plate may be combined to form a storage space in between to store a battery cell, and a shape of the storage space may be configured to correspond to an outer shape of a battery cell to be stored.

The first jig plate and the second jig plate may have a symmetrical structure.

The storage space may satisfy R being 1 percent (%) or less, based on Equation 1 below.

$$[\text{Equation 1}]$$

$$R = V_2/V_1 \times 100$$

In Equation 1, $V_2$ denotes for a volume of an empty space within the storage space without a battery cell stored, and $V_1$ denotes for a volume of an empty space within the storage space with a battery cell stored.

The heating device for a battery cell may be configured to heat a battery cell stored in the storage space, and the battery cell may be fastened onto the first jig plate and the second jig plate as being heated.

The heating device for a battery cell may further include a fastener configured to pass through and combine the first jig plate and the second jig plate, and the fastener may be provided in a space other than the storage space.

The heating device for a battery cell may further include a fastener configured to pass through and combine the first jig plate and the second jig plate.

Each of the first jig plate and the second jig plate may individually include a heat-transfer material with a thermal conductivity of 10 watts per meter-kelvin (W/m·K) or greater.

**Effects of the Invention**

According to the example embodiments, it is possible to prevent deterioration of battery performance caused by various issues, such as deformation of a battery cell due to uneven curing of a curable electrolyte composition and a chain of problems caused by the occurrence of cracks. According to the example embodiments, it is also possible to improve productivity by reducing time required to properly cure a curable electrolyte composition and by increasing processing speed.

**Brief Description of Drawings**

The drawings shown in the present disclosure are according to example embodiments, and the ratio of the depth, width, or thickness (or height) of each component is to describe the present disclosure in detail, and the ratios may be different from the actual ones. Also, each axis of a coordinate system shown in the drawings may be perpendicular to each other, and a direction indicated by an arrow may be a plus (+) direction and an opposite direction (rotated 180 degrees) of the direction indicated by the arrow may be a minus (-) direction.

FIGs. 1 through 3 are top plan views (viewed from the side) illustrating at least a portion of a heating device for a battery cell according to example embodiments of the present disclosure.

FIG. 4 is a top plan view (viewed from the side through a main body, and an electrode assembly embedded in the main body illustrated with a dotted line) illustrating at least a portion of a heating device for a battery cell according to other example embodiments of the present disclosure.

FIG. 5 is a cross-sectional view (viewed from the XY cross-section through a main body, and an electrode assembly embedded in the main body illustrated with a dotted line) illustrating at least a portion of a heating device for a battery cell according to other example embodiments of the present disclosure.

FIG. 6 is a top plan view (viewed from the side) illustrating at least a portion of a heating device for a battery cell according to example embodiments of the present disclosure.

FIG. 7 is a top plan view (viewed from the top) illustrating at least a portion of a heating device for a battery cell according to example embodiments of the present disclosure.

FIGs. 8 through 10 are top plan views (viewed from the side) illustrating at least a portion of a heating device for a battery cell with a spacer which is a comparative embodiment of the present disclosure.

FIG. 11 is a top plan view (viewed from the top) illustrating at least a portion of a heating device for a battery cell with a spacer which is a comparative embodiment of the present disclosure.

FIG. 12 is a graph showing a curing rate over processing time of a curable electrolyte composition, regarding a heating device for a battery cell according to an example embodiment and a comparative embodiment of the present disclosure.

FIG. 13 is a graph showing a temperature of a temperature measurement area $P_T$ over processing time, regarding a heating device for a battery cell according to an example embodiment and a comparative embodiment of the present disclosure.

## Detailed Description

Before the present disclosure is described in detail, it is to be understood that terms or words used in the present disclosure and the accompanying claims may not be limited to general definitions or dictionary definitions. Also, the terms and words may be construed under a principle that an inventor may appropriately define a concept of a term in order to describe their invention in the best way. Example embodiments described in the present disclosure and configurations illustrated in the accompanying drawings are merely the most desirable example embodiments, and may not represent all of the technical spirit of the present disclosure. Thus, various equivalents and modifications that may replace the example embodiments and configurations may be present at the time of filing the application of the present disclosure.

The same reference numerals or symbols shown in each drawing of the present specification may indicate parts or components that perform substantially the same function. For ease of explanation and understanding, different example embodiments may be described using the same reference numerals or symbols. That is, even though components with the same reference numerals are shown in the plurality of drawings, the plurality of drawings may not indicate one example embodiment.

In the following descriptions, terms in singular form include terms in a plural form unless an apparently and contextually conflicting description is present. In the following descriptions, terms in singular form include terms in plural form unless an apparently and contextually conflicting description is present. Terms such as "including" or "comprising" is to indicate that a feature, a number, an operation, an action, a component, a part, or a combination thereof is present. It should be understood that the terms are not to exclude in advance a possibility that one or more other features, numbers, operations, actions, component, parts, or combinations thereof may be present or added.

In addition, an expression such as an upper side, an upper surface, a lower side, a lower surface, a front surface, or a rear surface is based on directions shown in the drawings and the expression may be changed when a direction of a corresponding object is changed.

In addition, in the present disclosure and claims, terms including ordinal numbers such as "first" or "second" may be used to distinguish between elements. The ordinal number may be used to distinguish between identical or similar elements, and the meanings of the terms may not be limited by use of the ordinal number. As an example, elements combined with such ordinal numbers should not be construed as limiting the use order or arrangement order by the number. If necessary, each ordinal number may be used interchangeably.

In the present disclosure, the term "battery" may be used interchangeably with the term "cell". In addition, the term "battery" or "cell" may also refer to a generic term for a battery cell which is a unit of the battery and cell, a battery module that includes the battery cell, or a battery pack.

The present disclosure may provide a heating device for a battery cell 10 for preventing deformation of a battery cell 200 caused by uneven curing of a curable electrolyte composition 240 and a chain of problems caused by the occurrence of cracks, thereby preventing the deterioration of battery performance. In addition, the present disclosure provides the heating device for a battery cell 10 for improving productivity by reducing time required for properly curing the curable electrolyte composition 240 and by increasing processing speed.

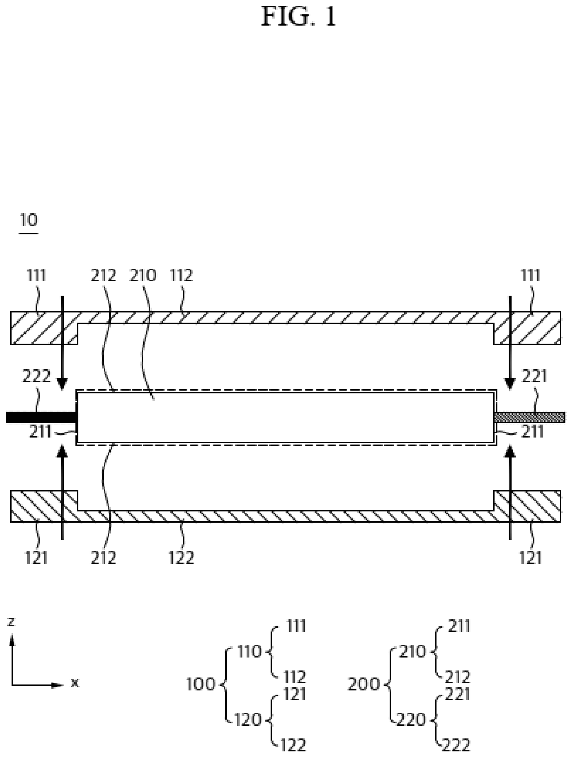

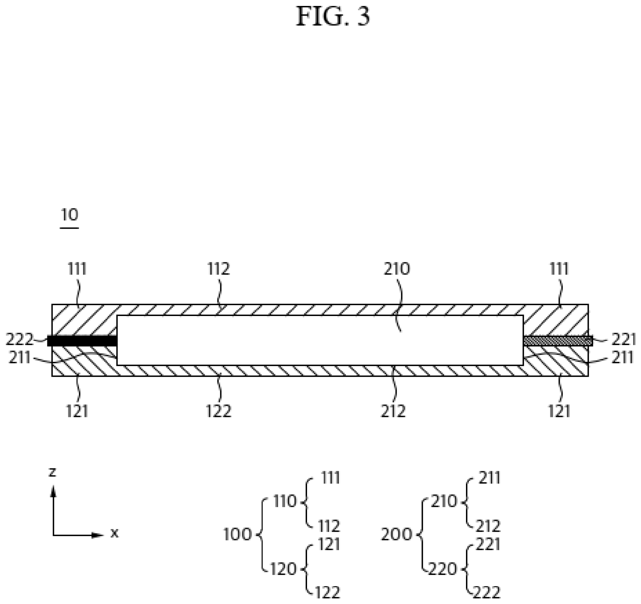

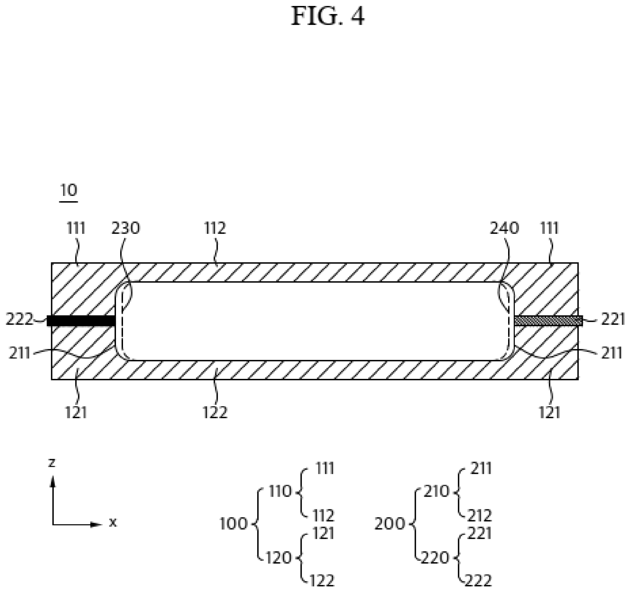

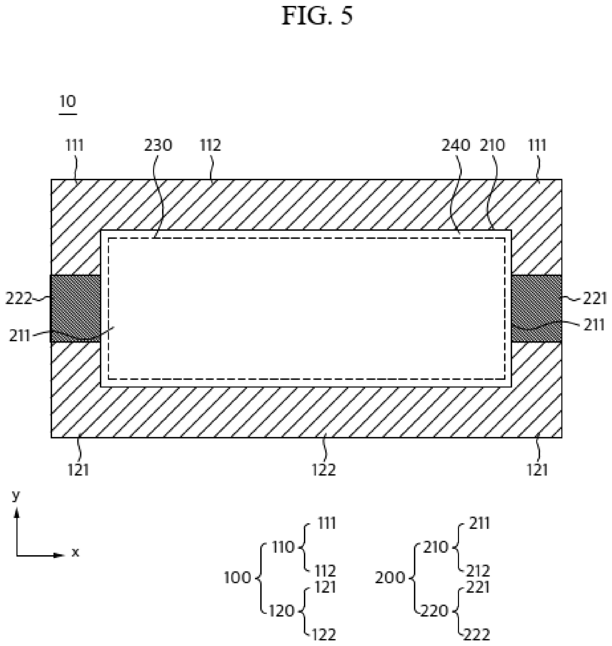

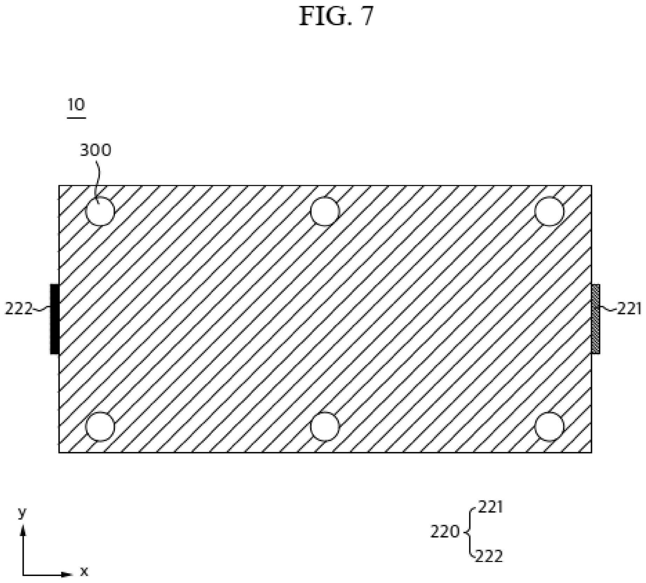

FIGs. 1 through 3 are top plan views (viewed from the side) illustrating at least a portion of the heating device for a battery cell 10 according to example embodiments of the present disclosure. FIG. 4 is a top plan view (viewed from the side through a main body 210) illustrating at least a portion of the heating device for a battery cell 10 according to other example embodiments of the present disclosure. FIG. 5 is a cross-sectional view (viewed from the XY cross-section through the main body) illustrating at least a portion of the heating device for a battery cell 10 according to other example embodiments of the present disclosure. In FIGs. 4 and 5, an electrode assembly 230 is embedded in the main body 210, and this is illustrated in dotted lines. FIG. 7 is a top plan view (viewed from the top) illustrating at least a portion of the heating device for a battery cell 10 according to example embodiments of the present disclosure.

The heating device for a battery cell 10 may heat the battery cell 200, and may also include a heat source for heating. The heat source may be provided in a jig plate 100 to be described hereinafter.

The heating device for a battery cell 10 may increase the temperature of the battery cell 200 from room temperature to a predetermined temperature. A process of increasing temperature above room temperature and/or a process of maintaining the increased temperature may be referred to as heating. The predetermined temperature may be set based on the configuration of the battery cell 200.

The battery cell 200 may include the main body 210 and an electrode tab 220 which is extended from a side surface 211 of the main body 210. The electrode tab 220 may include a positive electrode tab 221 and a negative electrode tab 222. The battery cell 200 may be classified based on the direction in which the positive electrode tab 221 and the negative electrode tab 222 face. For example, when the positive electrode tab 221 and the negative electrode tab 222 face the same direction, the battery cell 200 may be referred to as a one-way battery cell 200, and when the positive electrode tab 221 and the negative electrode tab 222 face away from each other, the battery cell 200 may be referred to as a two-way battery cell 200. The battery cell 200 of FIG. 1 is a two-way battery cell 200.

The main body 210 may act as an external material of the battery cell 200, and may include an electrode assembly 230 inside. The electrode assembly 230 may include positive electrode and negative electrode, and may also include a separator if required. The positive electrode of the electrode assembly 230 may be electrically connected to the positive electrode tab 221 which is extended to be protruded from the side surface 211 of the main body 210, and negative electrode of the electrode assembly 230 may be electrically connected to the negative electrode tab 222 which is extended to be protruded from the side surface 211 of the main body 210.

Depending on the shape of the main body 210, which acts as an external material, the battery cell 200 may be classified as a cylindrical, angular, coin, or pouch type. The main body 210 may include aluminum (Al) for rigidity, although not particularly limited thereto. Additionally, the battery cell 200 according to an example embodiment of the present disclosure, may be of a pouch-type.

The main body 210 may include the curable electrolyte composition 240. The curable electrolyte composition 240 may be in liquid form at room temperature. The curable electrolyte composition 240 may be cured by heating. Alternatively, the curable electrolyte composition 240 may be cured by either heating or pressurizing, or by both. The curable electrolyte composition 240 may turn into a gel and be cured by crosslinking reaction or polymerization under curing conditions. A curing rate is a content ratio (weight ratio) of cured curable electrolyte composition 240 compared to the content of the curable electrolyte composition 240 before curing shown in percentage, and may be measured based on a multiple bond using Fourier-transform infrared spectroscopy (FT-IR) or may be measured based on a ratio of a changed structure using nuclear magnetic resonance spectroscopy (NMR), although not particularly limited thereto. The cured curable electrolyte composition 240 may be referred to as a gel electrolyte, and the gel electrolyte may function as an electrolyte that transfers at least one of an electron transport material (such as lithium or sodium) and electron. Additionally, as the curing rate increases, the ratio of the gel electrolyte functioning as an electrolyte also increases, which can be more advantageous in terms of the performance of the battery cell 200.

The curable electrolyte composition 240 may be injected into the main body 210 which is sealed except an inlet and in which the electrode assembly 230 is embedded. The curable electrolyte composition 240 injected may be kept at room temperature for a predetermined time (in operation S1) and a curing process (operation S2) may take place. The process of curing may include operations S1 and S2.

Operation S1 is for properly impregnating the curable electrolyte composition 240 into the electrode assembly 230, and it may be desirable to perform the process at room temperature to minimize a side reaction within the curable electrolyte composition 240.

In operation S2, the curable electrolyte composition 240 within the main body 210 may be cured through heating, for example. The heating device for a battery cell 10 may be used in operation S2. Heat generated from a heat source of the heating device for a battery cell 10 may be transferred to the main body 210, and the curable electrolyte composition 240 may be cured by the heat transferred to the main body 210. That is, heating the battery cell 200 in the device for heating a battery cell 10 may refer to heating the curable electrolyte composition 240 included in the battery cell 200. As the curable electrolyte composition 240 is cured in operation S2, an interior of the main body 210 may be filled with a gel electrolyte. Operation S2 may be performed by increasing the temperature of the curable electrolyte composition 240 from room temperature to a predetermined temperature, and maintaining at the predetermined temperature. Here, the predetermined temperature may be a temperature at which the crosslinking reaction or polymerization could begin by heat and start turning the curable electrolyte composition 240 into a gel, while minimizing a side reaction. For example, the predetermined temperature may be 40 to 80 degree Celsius (°C) or 50 to 65 °C. Additionally, although the speed of increasing the temperature during the process of increasing the temperature to the predetermined temperature is not particularly limited thereto, the speed may be 1 °C/minute (min) to 20 °C/min, or 5 °C/min to 10 °C/min, to minimize a side reaction of the curable electrolyte composition 240.

The term "room temperature" used in the present specification refers to a temperature that is not heated or cooled. For example, it may refer to a temperature between 10 °C and 30 °C, such as a temperature that is approximately 15 °C or higher, approximately 18 °C or higher, approximately 20 °C or higher, approximately 23 °C or higher, approximately 27 °C or lower, or 25 °C. The unit of the temperature used in the present specification is degree Celsius (°C) unless otherwise defined. Additionally, when a measured temperature affects a physical property among physical properties referred herein, the physical property may be measured at 25 °C unless otherwise defined.

The curable electrolyte composition 240 may include an organic solvent and a polymer (e.g., polymer or oligomer). The curable electrolyte composition 240 may include an organic solvent, electron transport material salt, polymer, and crosslinking initiator.

The organic solvent included in the curable electrolyte composition 240 may include at least one selected from a carbonate-based solvent, ether-based solvent, or ester-based solvent. The carbonate-based solvent may include at least one selected from a cyclic carbonate-based solvent or linear carbonate-based solvent. The cyclic carbonate-based solvent may include at least one selected from ethylene carbonate (EC), propylene carbonate (PC), 1,2-buthylene carbonate (1,2-BC), 2,3-buthylene carbonate (2,3-BC), 1,2-pentylene carbonate (1,2-PTC), 2,3-pentylene carbonate (2,3-PTC), or vinylene carbonate (VC), for example. The linear carbonate-based solvent may include at least one selected from methyl carbonate, ethyl carbonate, dimethyl carbonate (DMC), diethyl carbonate (DEC), dipropyl carbonate (DPC), ethylmethyl carbonate (EMC), methylpropyl carbonate (MPC), or ethylpropyl carbonate (EPC), for example. The ether-based solvent may include at least one selected from dimethyl ether, diethyl ether, dipropyl ether, methylethyl ether, methylpropyl ether, or ethypropyl ether. The ester-based solvent may include at least one selected from a linear ester-based solvent or a cyclic ester-based solvent. For example, a linear ester compound may include at least one selected from methyl acetate, ethyl acetate, propyl acetate, methyl propionate, ethyl propionate, propyl propionate, or butyl propionate. In addition, a cyclic ester compound may include at least one selected from gamma-butorolactone, gamma-valerolactone, gamma-caprolactone, signma-valerolactone, or epsilon-caprolactone, for example.

The organic solvent of the curable electrolyte composition 240 may include a cyclic carbonate-based solvent and linear carbonate-based solvent. For example, the organic solvent may include ethylene carbonate (EC) and ethylmethyl carbonate (EMC). A volume of the linear carbonate-based solvent may be greater than a volume of the cyclic carbonate-based solvent in the curable electrolyte composition 240, and here, the volume here may be the ones measured at 25 °C.

The electron transport material salt included in the curable electrolyte composition 240 may be lithium salt or sodium salt, and a negative ion of the electron transport material salt may include at least one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-(FSI^-)$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, or $(CF_3CF_2SO_2)_2N^-$. The electron transport material salt may have a concentration ranging from 0.1 molarity (M) to 2 M, 0.3 M to 1.5 M, or 0.5 M to 1.2 M at 25 °C, considering adequate conductivity and viscosity, although not particularly limited thereto.

The polymer (e.g., polymer or oligomer) included in the curable electrolyte composition 240 may be crosslinkable. The polymer may include at least one of a fluorine-based polymer, (meta)acrylic-based polymer, or carbonate-based polymer, although not particularly limited thereto. The polymer may include at least one of a fluorine-based polymer or carbonate-based polymer.

The fluorine-based polymer may include a polyvinylidene fluoride (PVDF)-based polymer including polyvinylidene unit, for example, and the PVDF-based polymer may include at least one selected from PVDF, polyvinylidene fluoride-co-hexafluoropropylene (PVDF-HFP), polyvinylidene fluorideco-tetrafluoroproethylene (PVDE-TFE), polyvinylidene fluoride-co-chloro trifluoro ethylene (PVDF-CTFE), or polyvinylidene fluoride-co-trifluoroproethylene (PVDFTrFE). The acrylic-based polymer may derive from a monomer which includes an acrylate (methacrylate) functional group at its end. The carbonate-based polymer may derive from a monomer including a carbonate group at its end.

The polymer may be included as 0.1 weight percent (wt %) to 50 wt%, 0.2 wt% to 45 wt%, 0.3 wt% to 40 wt%, 0.4 wt% to 35 wt%, 0.5 wt% to 30 wt%, 0.6 wt% to 25 wt%, 0.7 wt% to 20 wt%, 0.8 wt% to 15 wt%, or 0.9 wt% to 10 wt% of the total weight of the curable electrolyte composition 240 in consideration of viscosity and stability after curing.

The crosslinking initiator included in the curable electrolyte composition 240 may include a thermal initiator, such as azobisisobutyronitrile (AIBM), or a peroxide initiator, such as benzoyl peroxide.

The curable electrolyte composition 240 may include an additive if required.

The additive, for example, may include a sulfate-based compound to minimize the decomposition of the curable electrolyte composition 240. The sulfate-based compound may include at least one of methylene sulfate (MSA), ethylene sulfate (ESA), trimethylene sulfate (TMS), or methyl trimethylene sulfate (MTMS), for example.

The additive, for example, may include a phosphate-based compound which aids in the formation of a solid electrolyte interphase (SEI) film. The phosphate-based compound may include at least one of lithium difluoro (bisoxalato) phosphate, lithium difluoro phosphate, tetramethyl trimethyl silyl phosphate, trimethyl silyl phosphate, or tris (2,2,2-trihluoroethyl) phosphate, for example.

The additive, for example, may include a sultone-based compound to aid in formation of the SEI film. The sultone-based compound may include at least one of 1,3-propane sultone (PS), 1,4-butane sultone, ethensultone, 1,3-propene sultone (PRS), 1,4-butene sultone, or 1-methyl-1, 3-propene sultone, for example.

The additive, for example, may include a carbodiimide-based compound to minimize the effect of moisture. The carbodiimide-based compound, for example, may include dycyclohexymethanediimine (DCC).

The heating device for a battery cell 10 may include a jig plate 100 for heating and supporting the battery cell 200. The jig plate 100 may be configured in multiple parts to transfer heat more uniformly to the battery cell 200 and to minimize deformation of the outer shape of the battery cell 200. For example, the jig plate 100 may include a first jig plate 110 supporting one surface of the main body 210, and a second jig plate 120 supporting another surface of the main body 210. The another surface of the main body 210 may refer to an opposite surface of the main body 210.

The jig plate 100 may include a heat-transfer material with thermal conductivity of 10 W/m·K or more to transfer heat more uniformly to the battery cell 200 and minimize the deformation of the outer shape of the battery cell 200. Here, the heat-transfer material may be in solid form at room temperature, and the thermal conductivity may be measured based on ISO 22007-2, for example. The heat-transfer material, for example, may include a metal material including at least one of aluminum (Al) or stainless. The heat-transfer material may have thermal conductivity of 20 W/m·K or more, 30 W/m·K or more, 40 W/m·K or more, 50 W/m·K or more, 60 W/m·K or more, 70 W/m·K or more, 80 W/m·K or more, 90 W/m·K or more, 100 W/m·K or more, 110 W/m·K or more, 120 W/m·K or more, 130 W/m·K or more, 140 W/m·K or more, or 150 W/m·K or more. The upper limit of the thermal conductivity of the heat-transfer material may be 500 W/m·K or less, 450 W/m·K or less, 400 W/m·K or less, 350 W/m·K or less, 300 W/m·K or less, or 250 W/m·K or less, although not particularly limited thereto.

Meanwhile, the main body 210 of the battery cell 200 may include the side surface 211 including a point at which the electrode tab 220 is extended, and may also include a main surface 212 that forms an inner space in which the electrode assembly 230 and the curable electrolyte composition 240 in liquid form can be stored. There may be more than one main surface 212, and one main surface 212 may be one surface of the main body 210 the first jig plate 110 supports, and another main surface 212 may be another surface of the main body 210 the second jig plate 120 supports.

Each of the first jig plate 110 and the second jig plate 120 may individually include a heat-transfer material to transfer heat more uniformly to the battery cell 200 and minimize deformation of the outer shape of the battery cell 200.

At least one of the first jig plate 110 or the second jig plate 120 may surround the side surface 211 of the main body 210. It may be preferred for both the first jig plate 110 and the second jig plate 120 to surround the side surface 211 of the main body 210 simultaneously. Through this, the heating device for a battery cell 10 may prevent issues of deformation of the battery cell and leakage of the curable electrolyte composition 240 caused due to uneven curing of the curable electrolyte composition 240. Specifically, in the case of a pouch-type battery cell 200, for example, a process of resealing a part of the pouch as a gas pocket is being removed during the manufacturing process is included. When the process of resealing is not performed properly, there may be a possibility of a leakage of the curable electrolyte composition 240, and when cured with the leakage it may deform the outer shape of the battery cell 200 or cause persistent sealing issues leading to gas venting, and may have a direct impact on the performance of the battery due to insufficient amount of electrolyte after curing. The heating device for a battery cell 10 may minimize leakage of the curable electrolyte composition 240 and prevent problems caused by the leakage, through the jig plate 100 that surrounds the side surface 211 of the main body 210.

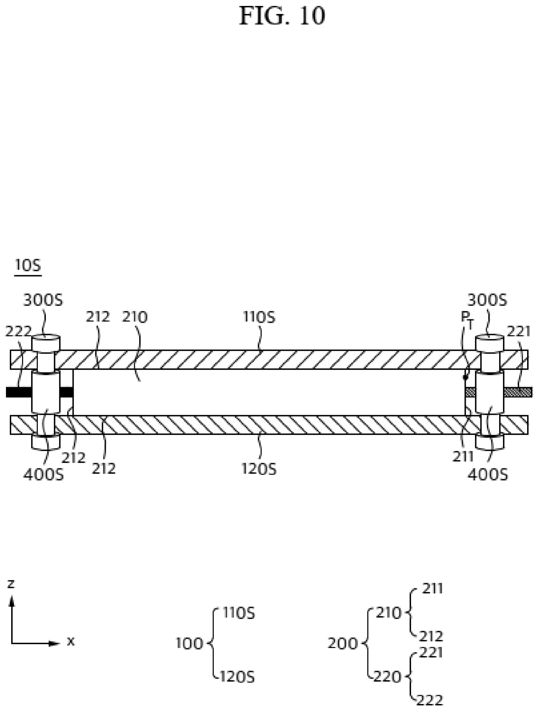

Meanwhile, as the curable electrolyte composition 240 undergoes the curing process, there has been an issue where stress concentrates on the side surface 211, leading to occurrence of cracks. For example, the method of pressurizing opposite sides of the battery cell 200 using a spacer 400S (refer to FIG. 10) had an issue of cracks occurring due to stress concentration as the curable electrolyte composition 240 is pushed toward the side surface 211 which is not pressurized. The heating device for a battery cell 10 can prevent the problem of cracks occurring using the jig plate 100 which surrounds up to the side surface 211 of the main body 210, as pressure is applied uniformly across the battery cell and prevents the curable electrolyte composition 240 from concentrating.

In addition, as a result, the heating device for a battery cell 10 may prevent deterioration of the battery performance using the jig plate 100 which surrounds the side surface 211 of the main body 210, and improve productivity by minimizing the curing time required for properly curing the curable electrolyte composition 240 and increasing processing speed.

The jig plate 110 may include a first side wall 111 surrounding a first region of the side surface 211 of the main body 210 and a first main wall 112 surrounding one surface of the main body 210. Here, the one surface of the main body 210 may be one of the main surfaces 212 of the main body 210 as described above. The first side wall 111 and the first main wall 112 may be formed to be integrated.

The second jig plate 120 may include a second side wall 121 surrounding a second region of the side surface 211 of the main body 210 and a second main wall 122 surrounding another surface of the main body 210. Here, the another surface of the main body 210 may be another main surface 212 of the main body 210 as described above. The second side wall 121 and the second main wall 122 may be formed to be integrated.

The second region of the side surface 211 the second side wall 121 is surrounding may be different from the first region of the side surface 211 the first side wall 111 is surrounding. Referring to FIGs. 1 to 3, with the positive electrode tab 221 and the negative electrode tab 222 as reference points, the side surface 211 of the upper side (+z direction) may be the first region, and the side surface 211 of the lower side (-z direction) may be the second region. Here, the first side wall 111 may surround the first region, the second side wall 121 may surround the second region, and the first region and the second region may be different and not overlap with each other.

The first side wall 111 may also surround at least a portion of one surface of the electrode tab 220. In addition, the second side wall 121 may also surround at least a portion of another surface of the electrode tab 220.

Specifically, the electrode tab 220 surrounded by the first side wall 111 may be at least one of the positive electrode tab 221 or the negative electrode tab 222, and the electrode tab 220 surrounded by the second side wall 121 may also be at least one of the positive electrode tab 221 or the negative electrode tab 222. Through this, the heating device for a battery cell 10 may eventually prevent deterioration of battery performance by preventing deformation of a battery cell due to uneven curing of the curable electrolyte composition and issues caused by cracks. According to the example embodiments, it is also possible to improve productivity by reducing the curing time required to properly cure the curable electrolyte composition 240 and by increasing processing time.

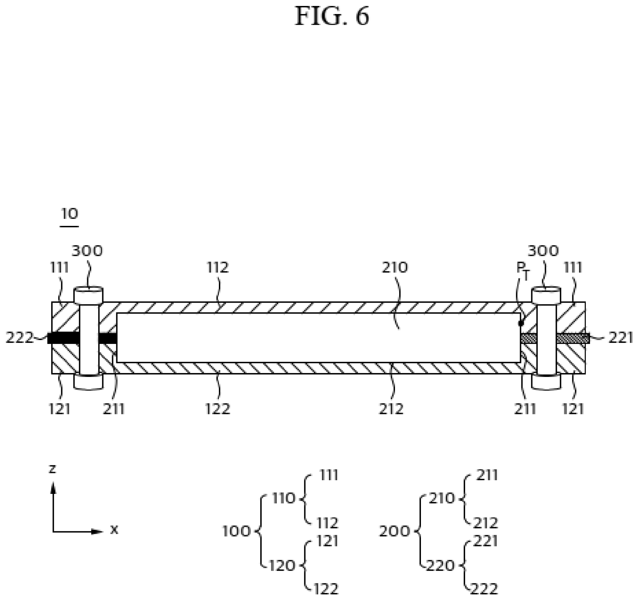

The first jig plate 110 and the second jig plate 120 may be combined. Through this, the first jig plate 110 and the second jig plate 120 may be fastened. Although the method of combining is not particularly limited, they may be fastened by a fastener 300 which will be described hereinafter (refer to FIGs. 6 and 7).

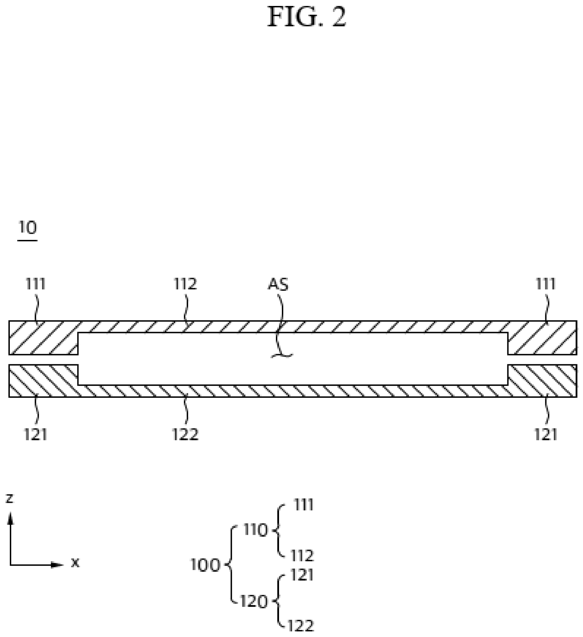

The first jig plate 110 and the second jig plate 120 may be combined to form a storage space AS in between in which the battery cell 200 may be stored (refer to FIG. 2). The first side wall 111 may form a stepped portion with an inner surface of the first main wall 112 and the second side wall 121 may form a stepped portion with an inner surface of the second main wall 122, to allow the first jig plate 110 and the second jig plate 120 to form the storage space AS. Specifically, the two stepped portions have the same depth which allow each of the first jig plate 110 and the second jig plate 120 to form half of the storage space AS.

The shape of the storage space AS may be configured to correspond to the outer shape of the battery cell 200 to be stored to allow the heating device for a battery cell 10 to apply heat uniformly to the battery cell 200. For example, as illustrated in FIG. 4, when the side surface 211 of a side at which the electrode tab 220 is provided has a curved surface, the storage space AS may also have a curved shape corresponding to the shape of the side surface 211. Specifically, an inner boundary along the first side wall 111 and the first main wall 112 may include a curved surface. For the same purpose, an inner boundary along the second side wall 121 and the second main wall 122 may also include a curved surface.

In addition, referring to FIGs. 4 and 5, each of the inner boundary of the first main wall 112 and the second main wall 122 forming the storage space AS may have a flat surface, in correspondence to the main surface 212 which is in a flat shape.

Also, referring to FIG. 5, the first side wall 111 may surround one surface of the electrode tab 220 and the second side wall 121 may surround another surface of the electrode tab 220.

The first jig plate 110 and the second jig plate 120 may have a symmetric structure, which may be more advantageous in applying more uniform heat to the battery cell 200.

The first jig plate 110 and the second jig plate 120 may form the storage space AS so as to minimize the empty space within the storage space AS when the battery cell 200 is stored in the storage space AS.

The first side wall 111 of the first jig plate 110 and the second side wall 121 of the second jig plate 120 may be formed to be in contact with each other. Through this, the first jig plate 110 and the second jig plate 120 may form most of the storage space AS solely through its structure. The first side wall 111 and the second side wall 121 may be in contact with each other along the entire area around the battery cell 200, except the area corresponding to the electrode tab 220. Thereby, the first side wall 111 and the second side wall 121 surround most of the border of the side surface 211 of the battery cell 200. Here, the first side wall 111 and the second side wall 121 which are in contact with each other may allow one of the first jig plate 110 and the second jig plate 120 to support the other.

The storage space AS may satisfy R being 1 % or less, 0.5 % or less, or 0.1 % or less, based on Equation 1 below. Through this, the heating device for a battery cell 10 may prevent deformation of the battery cell 200 due to uneven curing of the curable electrolyte composition 240. Additionally, the heating device for a battery cell 10 may not apply additional pressing force to the battery cell 200, but may maintain the shape of the battery cell 200 even if the battery cell 200 expands, by providing the storage apace AS similar to that of the shape and size of the battery cell so that the jig plate 100 can bear the expansion force.

$$[\text{Equation 1}]$$

$$R = V_2/V_1 \times 100$$

In Equation 1, $V_2$ denotes for a volume of an empty space within the storage space AS without the battery cell 200 stored, and $V_1$ denotes for a volume of an empty space within the storage space AS with the battery cell 200 stored.

The heating device for a battery cell 10 may heat the battery cell 200 stored in the storage space AS. While being heated, the battery cell 200 may be fastened to the first jig plate 110 and the second jig plate 120. The heating of the battery cell 200 may be performed while the first jig plate 110 and the second jig plate 120 are combined. The battery cell 200 stored in the storage space AS may be fastened to minimize its movement which may allow for more uniform application of heat regardless the location of the battery cell 200.

The heating device for a battery cell 10 may include the fastener 300 that pass through and combine the first jig plate 110 and the second jig plate 120. The fastener 300 may be provided in a space other than the storage space AS (refer to FIGs. 6 and 7). The first jig plate 110 and the second jig plate 120 may form a through hole in a space other than the storage space AS for the fastener 300 to pass through. The fastener 300 may be in plurality.

Metal plates that pressurize opposite sides of the battery cell 200 during the curing process have been used to prevent the issue the curable electrolyte composition 240 being cured while being excess in one direction due to gravity, however, the excessive pressurization of the metal plates caused uneven curing of the curable electrolyte composition 240 instead. The spacer 400S has been introduced to maintain a gap between the metal plates to prevent over-pressurization caused by the metal plates. Although the issue of over-pressurization caused by the metal plates has been addressed through the spacer 400S, a significant amount of time has been dedicated to the installation of the spacer and metal plate to perform the curing process, and there still remained issues such as deformation of the outer shape of the battery cell 200.

The heating device for a battery cell 10 may not include the spacer for maintaining a gap between the first jig plate 110 and the second jig plate 120 in a space other than the storage space AS. The heating device for a battery cell 10 may prevent the deterioration of the battery performance caused by deformation of the battery cell due to uneven curing of the curable electrolyte composition 240 and issues caused by cracks via side walls 111 and 121, instead of the spacer, and improve productivity by reducing the curing time required to properly curing the curable electrolyte composition 240 and increasing processing speed.

Hereinafter, example embodiments of the present disclosure are described with reference to detailed examples. Example embodiments and comparative embodiments are only examples of the present disclosure and do not limit the scope of the present disclosure accompanied herein. It shall be readily understood by those skilled in the art that various alterations and modifications are possible within the scope and technical spirit of the present disclosure. In addition, the alterations and modification fall within the scope of the present disclosure.

**<Method of measuring physical properties>**

The physical characteristics shown using the Example Embodiment 1 and Comparative Embodiment 1 were measured through the following process.

**1. Time required for installation and removal during curing process**

When manufacturing 50 battery cells 200 using the same method, the time required to install and the time required to remove heating devices for a battery cell 10 and 10S to heat the battery cell 200, in which the curable electrolyte composition 240 is injected, were added together for measurement. The devices for heating the battery cells 10 and 10S were installed and removed by three research workers themselves.

**2. Measuring resistance characteristics**

The final battery cell 200 manufactured was charged and discharged every interval of SOC 10 starting from SOC 100 %, from SOC 100 to SOC 0 at 2.5 C pulse to measure resistance using a charging and discharging equipment, and the initial resistance measured (ini.R) is shown.

**3. Capacity retention assessment**

The front and bottom surface of the final battery cell 200 manufactured was surrounded by a plate jig made of aluminum (Al), and the battery cell 200 was fastened by fastening the plate jig with a bolt so that the battery cell 200 cannot move. Here, the discharge capacity of 1 cycle and discharge capacity of 100 cycles were measured by charging at 0.3C up to a voltage (charging voltage) corresponding to SOC98 under a constant current/constant voltage (CC/CV) condition in a condition where 25 °C is maintained, cut-off at 0.05C, discharging at 0.3C to a voltage (discharging voltage) corresponding to SOC4 under a constant current (CC) condition, and measuring the discharge capacity. The capacity retention is shown in percentage (%) by dividing discharge capacity of 100 cycles by discharge capacity of 1 cycle, based on 100 cycles. Here, the unit of the discharge capacity may be "Ah".

**4. Reaction surface area uniformity assessment**

The uniformity of the area was measured by identifying whether there is an air layer within the gel electrolyte (identifiable as shown in different color when air scanned) by air scanning the final battery cell 200 manufactured.

**5. Stiffness assessment**

The stiffness of the final battery cell 200 manufactured was measured using the universal testing machine (UTM) which was used for fastening a stiffness jig. The diameters of both upper plate and lower plate of the jig were approximately 5 millimeters (mm), and the span of the lower plate jig was set to be approximately 16 times the thickness of the battery cell 200. Then, a three-point bending rupture test was carried out, the load applied to the battery cell was set to approximately 30 gram-force (gf), bending speed was set to approximately 5 mm/ minute (min), and compression length was set to maximum 2 mm.

## 6. Battery cell outer shape assessment

Deformation (such as bending) of the outer shape of the final batter cell 200 manufactured was checked with the naked eye, and marked 'o' if deformation was observed, and 'X' if no deformation was observed.

## 7. Curing rate assessment over processing time

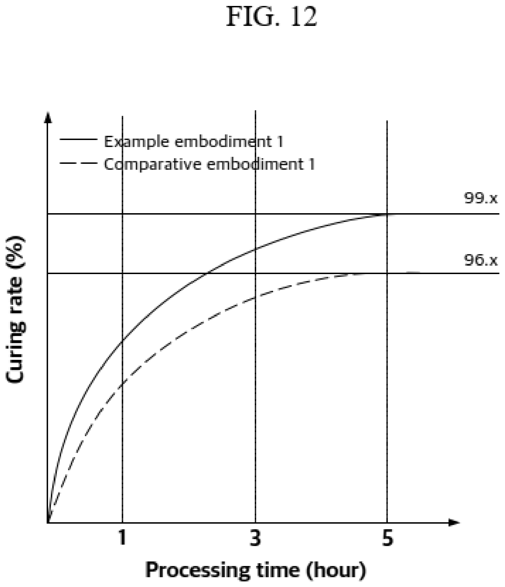

Each battery cell 200 was dismantled 1 hour, 3 hours, and 5 hours after heating the battery cell 200 which was not cured yet, and $^1$H NMR analysis was performed using a known method on the curable electrolyte composition 240 which was in the process of curing. The curable electrolyte composition 240 which is in the process of curing may be sampled at a point of uniformity calculated through air scanning. During the $^1$H NMR analysis, a chemical shift was expressed using tetramethylsilane (TMS) diluted in deuterochloroform ($CDCl_3$) as the reference compound (RC), and through this the curing rate has been calculated by calculating a ratio corresponding to the structure after curing. The result is shown in FIG. 12.

## 8. Curing rate assessment over processing time

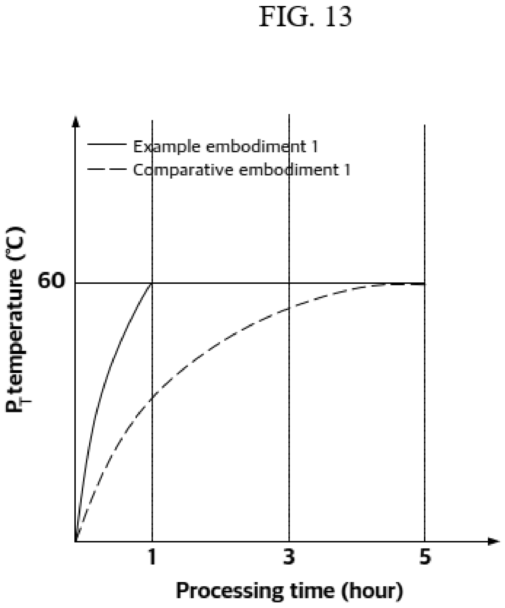

The temperature of the temperature measurement point $P_T$, which is a point on the side surface 211, was measured in non-contact manner while performing the curing process. The result is shown in FIG. 13.

## Example Embodiment 1

The heating device for a battery cell 10 according to Example Embodiment 1 may reference FIGs. 1 through 7. The curable electrolyte composition 240 in liquid form at room temperature was injected into a two-way pouch-type battery cell 200 including the electrode assembly, and sealed. Here, the curable electrolyte composition 240 includes a fluorine-based oligomer, in a mixed solvent in which ethylene carbonate (EC) and ethylmethyl carbonate (EMC) are mixed in 3:7 ratio at 25 °C, which makes up 1 wt% to 10 wt% of the total weight of the curable electrolyte composition 240, and includes approximately 0.7M of lithium hexafluorophosphate ($LiPF_6$), approximately 0.5 M of lithium bis(fluorosulfonyl)imide (LiFSI), and an additive. For the additive, an additive including 1,3-propane sultone (PS), ethylene sulfate (ESA), and dicyclohexylmethanediimine (DCC) was used. The heating device for a battery cell 10 includes the first jig plate 110 including: the first side wall 111 surrounding one surface of the electrode tab 220 and the first region of the side surface 211 of the main body 210; and the first main wall 112 surrounding one surface of the main body 210. Also, the heating device for a battery cell 10 includes the second jig plate 120 having a symmetrical structure with the first jig plate 110. The second jig plate supports the second side wall 121 surrounding another surface of the electrode tab 220 and the second region of the side surface 211 of the main body 210, and another surface of the main body 210. The battery cell 200 is placed between the first jig plate 110 and the second jig plate 120, and when the first jig plate 110 and the second jig plate 120 are moved in direction toward the battery cell 200 and support the battery cell 200, the first jig plate 110 and the second jig plate 120 are fastened through the fastener 300.

Then, the heating device for a battery cell 10 kept the battery cell 200 at room temperature for a predetermined time and began heating, and when the temperature of the temperature measurement point $P_T$ which is a point on the side surface 211 reached 60 °C (predetermined temperature), manufactured the battery cell 200 which is completely cured by maintaining the temperature. Then, the final battery cell 200 was manufactured by going through an afterward formation process including formation and aging processes.

## Example Embodiment 2

The heating device for a battery cell 10 according to Example Embodiment 2, injected the same curable electrolyte composition 240 used in Example Embodiment 1, except for using a carbonate-based oligomer instead of the fluorine-based oligomer, into a two-way pouch-type battery cell 200 and sealed, and manufactured the final battery cell 200 in the same manner as Example Embodiment 1 described above.

## Comparative Embodiment 1

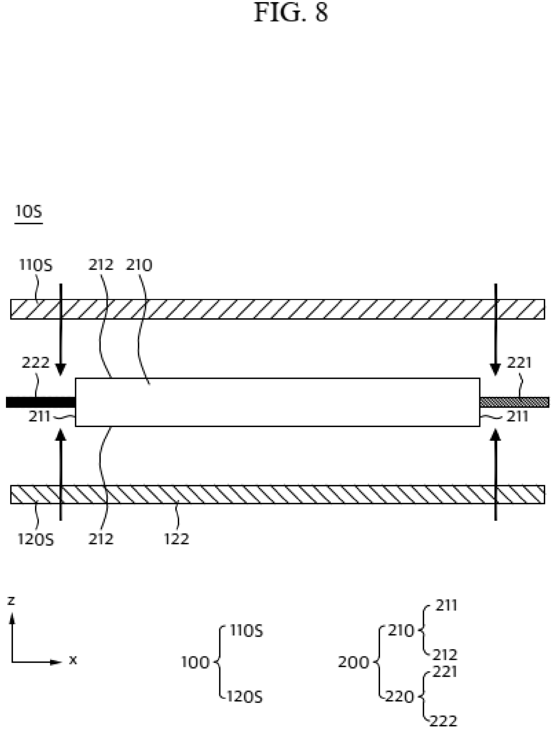

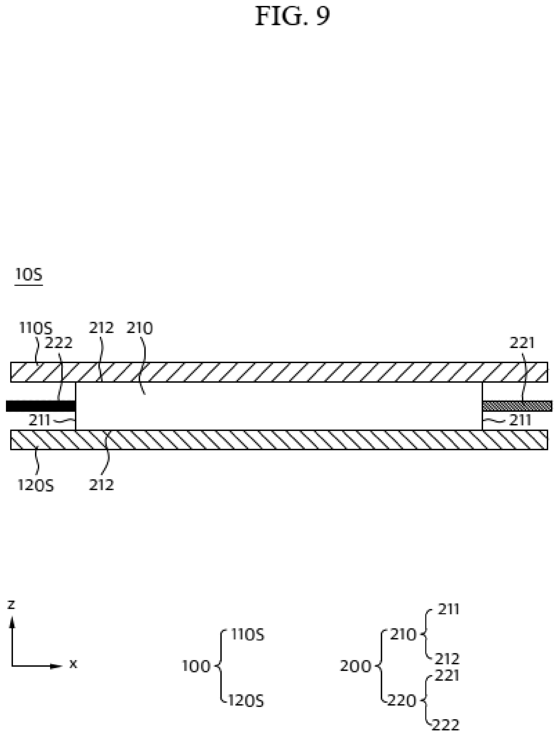

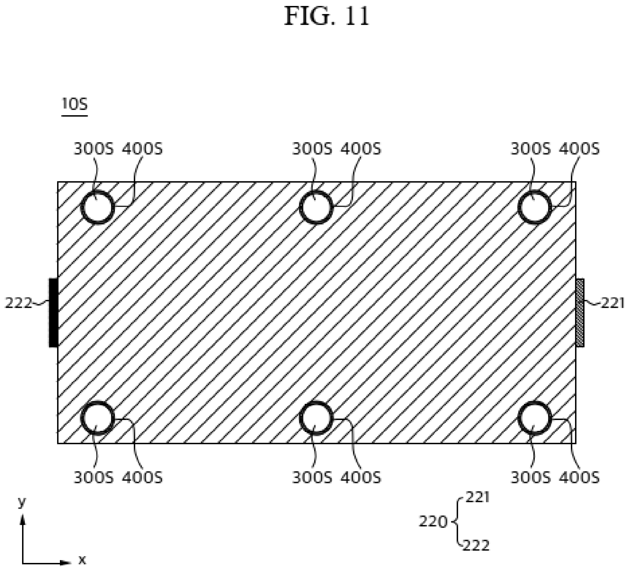

A heating device for a battery cell 10S according to Comparative Embodiment 1 may reference FIGs. 8 through 11. FIGsS. 8 through 10 are top plan views (viewed from the side) illustrating at least a portion of the heating device for a battery cell 10S with the spacer 400S which is a comparative embodiment of the present disclosure. FIG. 11 is a top plan view (viewed from the top) illustrating at least a portion of the heating device for a battery cell 10S with a spacer which is a comparative embodiment of the present disclosure.

The heating device for a battery cell 10S includes a first jig plate 110S surrounding one surface of the main body 210 but not the side surface 211 and one surface of the electrode tab 220, and a second jig plate 120S surrounding another surface of the main body 210 but not the side surface 211 and one surface of the electrode tab 220. The battery cell 200 was placed between the first jig plate 110S and the second jig plate 120S, and when the first jig plate 110S and the second jig plate 120S move in direction toward the battery cell 200 and support the battery cell 200, the first jig plate 110 and the second jig plate 120 were fastened by the fastener 300S, and the spacer 400S that surrounds the fastener 300S and maintains a gap between the first jig plate 110S and the second jig plate 120S was installed. Here, the same battery cell 200 prepared for Example Embodiment 1 was used.

Then, the heating device for a battery cell 10S kept the battery cell 200 at room temperature for a predetermined time and began heating, and when the temperature of the temperature measurement point $P_T$, which is a point on the side surface 211, reached 60 °C (predetermined temperature), manufactured the completely cured battery cell 200 by maintaining the temperature. Then, the final battery cell 200 was manufactured by going through an afterward formation process including formation and aging processes. The afterward formation process including formation and aging processes was performed in the same manner as Example Embodiment 1.

The physical properties measured in Example Embodiment 1, Example Embodiment 2, and Comparative Embodiment 1 are shown in Table 1 below. Additionally, the physical properties measured in Example Embodiment 1 and Comparative Embodiment 1 are shown in FIGs. 12 and 13. FIG. 12 is a graph illustrating a curing rate over processing time of the curable electrolyte composition 240 with respect to the heating devices for a battery cell 10 and 10S according to Example Embodiment 1 and Comparative Embodiment 1. FIG. 13 is a graph illustrating a temperature of a temperature measurement area $P_T$ over processing time with respect to the heating devices for a battery cell 10 ad 10S according to Example Embodiment 1 and Comparative Embodiment 1 of the present disclosure.

[Table 1]

|  | Example Embodiment 1 | Example Embodiment 2 | Comparative Embodiment 1 |
|---|---|---|---|
| Time required for installation and removal during curing process | Approx. 30 mins | Approx. 30 mins | Approx. 3 hrs |
| Resistance characteristics (ini. R) | Approx. 2 milliohm (m$\Omega$) | Approx. 2 m$\Omega$ | Approx. 2.1 m$\Omega$ |
| Capacity retention | Approx. 99 % | > 95 % | Approx. 98 % |
| Reaction surface area uniformity | 97 % | >95 % | 83 % |
| Stiffness | 110 % | >105 % | 100 % (ref.) |
| Battery cell outer shape assessment | X | X | ○ |

Referring to Table 1, the time required for installation and removal in Example Embodiment 1 and Example Embodiment 2 is significantly shorter than that of Comparative Embodiment 1. The table also shows that Example Embodiment 1 and Example Embodiment 2 have performed better in resistance characteristics, capacity retention, reaction surface area uniformity, and battery cell outer shape assessments. Referring to FIG. 12, Example Embodiment 1 cures faster than Comparative Embodiment 1, as well as has higher final curing rate. Referring to FIG. 13, Example Embodiment 1 reaches the predetermined temperature faster than Comparative Embodiment 1, and is cured at the temperature for a longer time than Comparative Embodiment 1, thereby capable of increasing productivity by reducing time required to reach the final curing rate.

The heating device for a battery cell 10 according to an example embodiment of the present disclosure may be applied to electric vehicles, battery charging stations, and other green technologies using batteries, such as solar power generation or wind power generation. In addition, the heating device for a battery cell 10 according to an example embodiment of the present disclosure may be used for eco-friendly electric vehicles or hybrid vehicles for preventing climate change by reducing air pollution and greenhouse gases.

While the present disclosure has been described in detail in connection with above example embodiments, however, the scope of the present disclosure is not limited thereto and it is to be understood by those skilled in the art that the present disclosure is intended to cover various modifications and equivalent arrangements within the spirit and scope of the appended claims. In addition, the above-described example embodiments may be implemented with some elements thereof removed, and each example embodiment may be combined to be implemented.

[Description of Symbols]

| | |
|---|---|
| 10 | Heating device for a battery cell |
| 100 | Jig plate |
| 110 | First jig plate |
| 111 | First side wall |
| 112 | First main wall |
| 120 | Second jig plate |
| 121 | Second side wall |
| 122 | Second main wall |
| 200 | Battery cell |
| 210 | Main body |
| 211 | Side surface |
| 212 | Main surface |
| 220 | Electrode tab |
| 221 | Positive electrode tab |
| 222 | Negative electrode tab |
| 300 | Fastener |
| $P_T$ | Temperature measurement area |
| 400S | Spacer |

**Claims**

1.  A heating device for a battery cell that comprises a main body and an electrode tab extended from a side surface of the main body, the device comprising:

    a first jig plate configured to support one surface of the main body; and
    a second jig plate configured to support another surface of the main body, wherein at least one of the first jig plate or the second jig plate is configured to surround the side surface of the main body.

2.  The device of claim 1, wherein the battery cell comprises an electrode assembly and a curable electrolyte composition within the main body, and the curable electrolyte composition is cured by heating.

3.  The device of claim 2, wherein the curable electrolyte composition comprises:

    an organic solvent; and
    a polymer.

4.  The device of claim 3, wherein the organic solvent includes:

    a cyclic carbonate-based solvent; and
    a linear carbonate-based solvent, and
    the polymer includes one or more of a fluorine-based polymer or a carbonate-based polymer.

5.  The device of claim 1, wherein the first jig plate comprises:

    a first sidewall surrounding a first region of the side surface of the main body; and
    a first main wall surrounding the one surface of the main body, and
    the second jig plate comprises:

a second sidewall surrounding a second region of the side surface of the main body; and
a second main wall surrounding another surface of the main body,
wherein the first side wall also surrounds at least a portion of one surface of the electrode tab, and the second side wall also surrounds at least a portion of another surface of the electrode tab.

6. The device of claim 1, wherein the first jig plate and the second jig plate

   are combined to form a storage space in between to store the battery cell, and
   a shape of the storage space is configured to correspond to an outer shape of the battery cell to be stored.

7. The device of claim 6, wherein the first jig plate and the second jig plate have a symmetrical structure.

8. The device of claim 6, wherein the storage space satisfies R being 1 percent (%) or less, based on Equation 1:

$$[\text{Equation 1}]$$
$$R = V_2/V_1 \times 100$$

   wherein in Equation 1, $V_2$ is a volume of an empty space within the storage space without the battery cell stored, and $V_1$ is a volume of an empty space within the storage space with the battery cell stored.

9. The device of claim 6, configured to heat the battery cell stored in the storage space,
   wherein the battery cell is fastened onto the first jig plate and the second jig plate as being heated.

10. The device of claim 6, further comprising a fastener configured to pass through and combine the first jig plate and the second jig plate, and
    the fastener is provided in a space other than the storage space.

11. The device of claim 1, further comprising a fastener configured to pass through and combine the first jig plate and the second jig plate.

12. The device of claim 1, wherein each of the first jig plate and the second jig plate individually comprises a heat-transfer material with a thermal conductivity of 10 W/m·K or greater.

# FIG. 1

# FIG. 2

10

FIG. 3

# FIG. 4

FIG. 5

# FIG. 6

# FIG. 7

# FIG. 8

# FIG. 9

# FIG. 10

FIG. 11

FIG. 12

FIG. 13

## INTERNATIONAL SEARCH REPORT

| International application No. |
|---|
| **PCT/KR2025/001456** |

| **A.** | **CLASSIFICATION OF SUBJECT MATTER** |
|---|---|
| | **H01M 10/04**(2006.01)i; **H01M 10/0565**(2010.01)i |

According to International Patent Classification (IPC) or to both national classification and IPC

| **B.** | **FIELDS SEARCHED** |
|---|---|

Minimum documentation searched (classification system followed by classification symbols)

H01M 10/04(2006.01); B29C 35/00(2006.01); H01M 10/0567(2010.01); H01M 10/0587(2010.01); H01M 2/02(2006.01); H01M 2/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 셀 (battery cell), 가열 (heat), 지그 (jig), 전해질 (electrolyte), 경화 (curing)

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | KR 10-2017-0055644 A (LG CHEM, LTD.) 22 May 2017 (2017-05-22) | | 1-9,12 |
| | See abstract; claims 1, 2, 11, 14, 15 and 20; paragraphs [0018], [0025], [0054], [0062], [0093], [0095], [0105], [0112] and [0118]; and figures 2, 5, 8, 9 and 11. | | |
| Y | | | 10,11 |
| Y | KR 10-2016-0056207 A (LG CHEM, LTD.) 19 May 2016 (2016-05-19) | | 10,11 |
| | See paragraph [0026]; and figure 4. | | |
| A | JP 2019-008954 A (NISSAN MOTOR CO., LTD.) 17 January 2019 (2019-01-17) | | 1-12 |
| | See abstract; and claim 1. | | |
| A | JP 2014-220109 A (TOYOTA MOTOR CORP.) 20 November 2014 (2014-11-20) | | 1-12 |
| | See abstract; claim 1; paragraphs [0034]-[0037]; and figure 4. | | |
| A | JP 2012-234670 A (NEC ENERGY DEVICES LTD.) 29 November 2012 (2012-11-29) | | 1-12 |
| | See abstract; and claim 1. | | |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2025** | **13 May 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 730 459 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2017-0055644 | A | 22 May 2017 | CN | 108140884 | A | 08 June 2018 |
| | | | | CN | 108140884 | B | 20 July 2021 |
| | | | | EP | 3327852 | A1 | 30 May 2018 |
| | | | | EP | 3327852 | B1 | 30 October 2019 |
| | | | | JP | 2018-527706 | A | 20 September 2018 |
| | | | | JP | 6727621 | B2 | 22 July 2020 |
| | | | | KR | 10-2013914 | B1 | 23 August 2019 |
| | | | | PL | 3327852 | T3 | 28 February 2020 |
| | | | | US | 11063294 | B2 | 13 July 2021 |
| | | | | US | 2018-0254522 | A1 | 06 September 2018 |
| | | | | WO | 2017-082618 | A1 | 18 May 2017 |
| KR | 10-2016-0056207 | A | 19 May 2016 | CN | 107112575 | A | 29 August 2017 |
| | | | | CN | 107112575 | B | 09 July 2019 |
| | | | | KR | 10-1809689 | B1 | 15 December 2017 |
| | | | | US | 10147965 | B2 | 04 December 2018 |
| | | | | US | 2017-0317376 | A1 | 02 November 2017 |
| | | | | WO | 2016-076578 | A1 | 19 May 2016 |
| JP | 2019-008954 | A | 17 January 2019 | JP | 6862639 | B2 | 21 April 2021 |
| JP | 2014-220109 | A | 20 November 2014 | None | | | |
| JP | 2012-234670 | A | 29 November 2012 | JP | 5660619 | B2 | 28 January 2015 |

Form PCT/ISA/210 (patent family annex) (July 2022)

**REFERENCES CITED IN THE DESCRIPTION**

**Patent documents cited in the description**

- KR 1020240013980

- KR 1020250011189